# EUROPEAN PATENT APPLICATION

(11) **EP 1 384 629 A2**
(43) Date of publication of application: **28.01.2004**
(21) Application number: 03254619.4
(22) Date of filing: 24.07.2003
(51) Int. Cl.: B60R 19/12, B60R 21/34

(54) **Bumper structure for vehicle**

(30) Priority: 25.07.2002 JP 2002216882
(71) Applicant: FUJI JUKOGYO KABUSHIKI KAISHA, Tokyo (JP)
(72) Inventor: Suganuma, Hiroshi, Fuji Jukogyo KK, Tokyo (JP); Satou, Kenichi, Fuji Jukogyo KK, Tokyo (JP)
(74) Representative: W.P. Thompson & Co.

(57) **Abstract**

A bumper structure extending over a width of a vehicle body is disclosed. The bumper structure includes a bumper face (13) attached to the vehicle body, and upper (12) and lower (22) shock absorbers interposed between the vehicle body and the bumper face so as to have the lower shock absorber below the upper shock absorber. Crash stroke of the upper shock absorber is larger than that of the lower shock absorber. This bumper structure prevents a pedestrian from being damaged when the vehicle contacts the pedestrian, by generating an upward rotational force applied to the pedestrian.

## Description

### BACKGROUND OF THE INVENTION

### 1. Field of the Invention

The present invention relates to a bumper structure for a vehicle which is attached to a front part of a vehicle body extending in a widthwise direction of the vehicle, more specifically to a bumper structure which effectively protects a pedestrian when a vehicle with the bumper structure collides with the pedestrian.

### 2. Discussion of the Related Art

In recent years, various proposals have been made on a bumper structure for a vehicle for protecting a pedestrian when the vehicle contacts the pedestrian during a low speed operation of the vehicle.

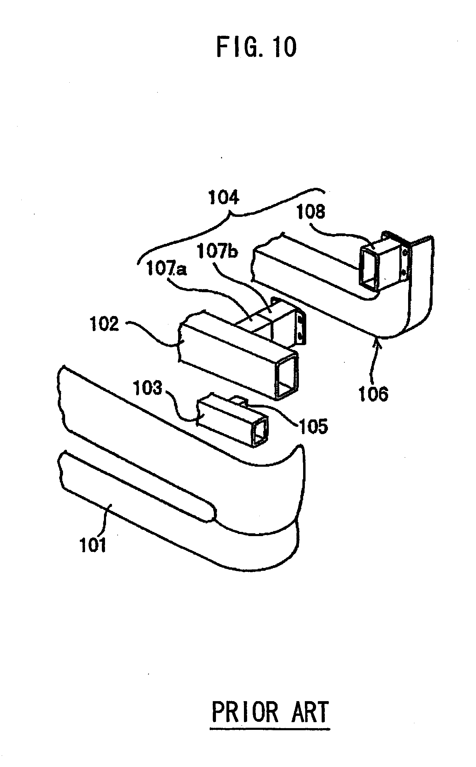

Fig. 10 is a perspective exploded diagram of a conventional bumper structure for a vehicle. A bumper face 101 covers front faces of an upper bumper beam 102 and a lower bumper beam 103. The upper and lower bumper beams 102 and 103 extend in a widthwise direction of the vehicle, and are supported on a radiator panel 106 at a front part of the vehicle via an upper bumper stay 104 and a lower bumper stay 105, respectively.

The upper bumper stay 104 has a double structure containing a long outer tubular stay 107 and a short inner tubular stay 108. The long outer tubular stay 107 is fixed to both the upper bumper beam 102 and the radiator panel 106. On the other hand, the short inner tubular stay 108 is supported only on the radiator panel 106. More precisely, the outer tubular stay 107 is composed of a front stay 107a having an enlarged, high strength front part and a rear, lower strength stay 107b.

A front edge of the lower bumper stay 105 is fixed to the lower bumper beam 103, and a rear edge of the lower bumper stay 105 is fixed to the radiator panel 106 via a bracket (not shown). Here, the strength of the stays in the lengthwise direction of the vehicle is set so that the lower bumper stay 105 is stronger than that of the upper bumper stay 104.

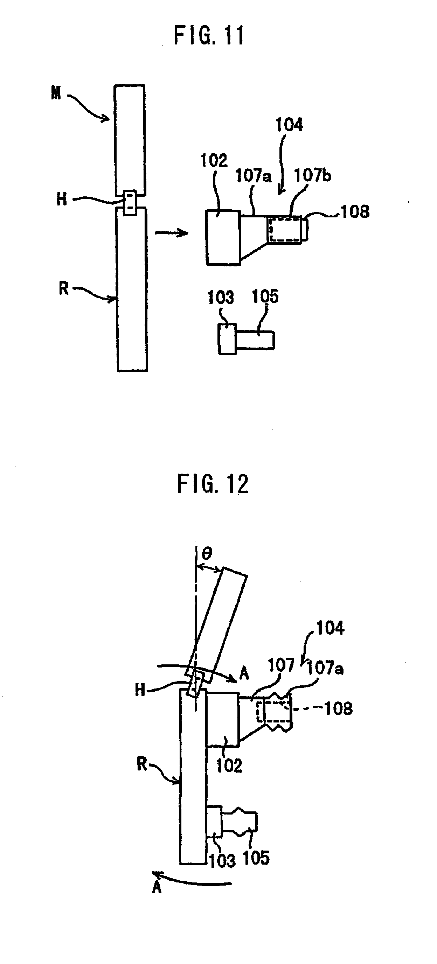

Figs. 11 and 12 are schematic diagrams for showing how the vehicle having the above mentioned bumper structure may contact a pedestrian when the vehicle travels at a low speed. In such case, it is possible that the upper bumper beam 102 is brought into contact with a part near a knee H and that the lower bumper beam 103 is brought into contact with a lower part of the leg R below the knee H.

In the above mentioned case, the upper bumper stay 104 supporting the upper bumper beam 102 is deformed by the rear stay 107b, of low strength, being crushed. The lower bumper stay 105 is also deformed by being crushed. These deformations absorb or weaken an applied impact. The strength of the upper bumper stay 104 is smaller than that of the lower bumper stay 105. Therefore, the upper bumper stay 104 has a larger crush stroke than the lower bumper stay 105. As a result, force is generated in a direction so as to apply an upward force on a leg R of a pedestrian M as shown in Fig. 12. Namely, the pedestrian M is moved in a rotating direction indicated by an arrow A. The generated force makes a small bending angle at the knee H.

The behavior of the knee H of a pedestrian, when the leg contacts the vehicle, is controlled based on the above structure, so that a load to be applied to the knee is decreased.

Alternatively, Japanese Kokai Publication 2001-277963 discloses a technology wherein the upper bumper stay 104 in the above mentioned structure is replaced by an upper shock absorber, and the lower bumper stay 105 therein is also replaced by a lower shock absorber. In the publication, the strength of the upper shock absorber, in the lengthwise direction of the vehicle, is set to be smaller than that of the lower shock absorber. Accordingly, the same function is obtained, as that obtained in the aforementioned conventional bumper structure. Thus, the impact is eased and less load is applied to the knee.

In the above mentioned two bumper structures for vehicles, it is possible to protect a part of a leg, particularly at a knee which can be easily damaged when the person contacts a moving vehicle.

However, the above mentioned configuration, i.e., to use the upper bumper stay/upper shock absorber having less strength than the lower bumper stay/lower shock absorber, does not sufficiently reduce possible damage to a pedestrian, depending upon the strength ratio or crushing ratio between the upper and lower bumper stays or between the upper and lower shock absorbers.

### OBJECT AND SUMMARY OF THE INVENTION

It is therefore an object of the present invention to provide a bumper structure for a vehicle which protects a pedestrian from damage especially to a knee by appropriately selecting the ratio of crush strokes of bumper upper and lower parts when the vehicle accidentally contacts the pedestrian, comprising a bumper face provided on the front part of the vehicle body and extending in a widthwise direction of the vehicle body; an upper shock absorber extending in a widthwise direction of the vehicle body interposed between the front part of the vehicle body and the bumper face; and a lower shock absorber provided below the upper shock absorber and interposed between the front part of the vehicle body and the bumper face, a first crush stroke of the upper shock absorber being larger than a second crush stroke of the lower shock absorber when an identical load is applied to each of the upper shock absorber and the lower shock absorber from the front, and a crushing ratio of the first crush stroke to the second crush stroke being determined as a predetermined value.

When a vehicle with the bumper structure of the present invention contacts a pedestrian during a low-speed driving, a bumper upper part contacts a part near a knee of the pedestrian, and a bumper lower part contacts a lower part of the leg. The upper shock absorber of the bumper upper part is designed to have a larger crush stroke than the lower shock absorber of the bumper lower part. Therefore, the bumper lower part pushes a lower part of the leg forwardly and applies an upward force on the leg of the pedestrian and a bumper upper part makes the part near the knee relatively backward since the crush stroke of the upper shock absorber is larger than that of the upper shock absorber. By the application of a rotational force to the entire leg, the impact load applied to the knee is decreased. Because a ratio of crush strokes is predetermined, a bending angle formed by a leg part below the knee and another leg part above the knee can be maintained in an appropriate range. Thus, it is possible to decrease the damage to be applied to the knee H.

### BRIEF DESCRIPTION OF THE DRAWINGS

By way of example only, specific embodiments of the present invention will now be described, with reference to the accompanying drawings, wherein:

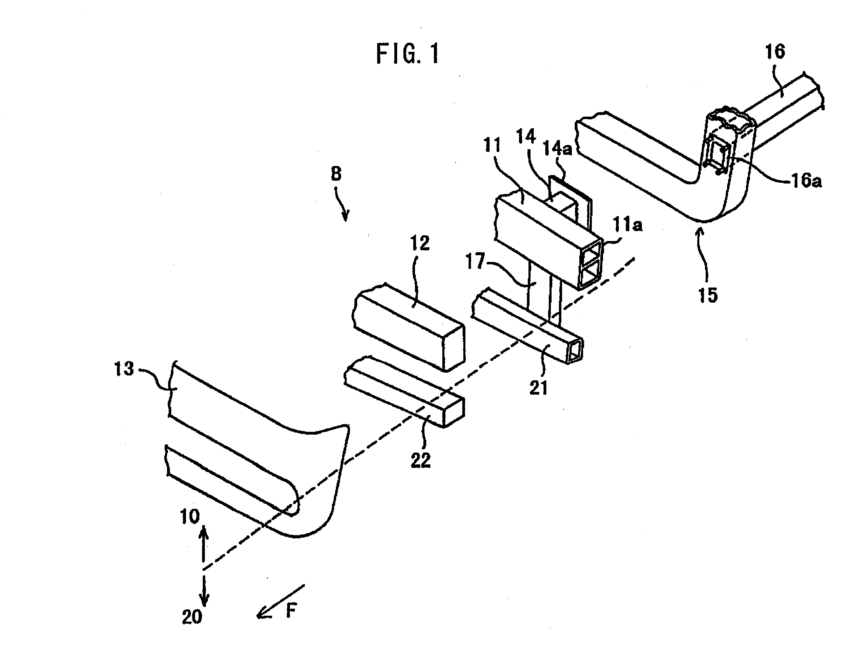

Fig. 1 is an exploded perspective view for showing a left part of a bumper structure of the present invention;
Fig. 2 is a diagram for explaining the installation of a bumper structure as an embodiment of the present invention to a vehicle body;
Fig. 3 is a diagram for explaining a bumper structure of the present invention, and a positional relationship between the bumper structure and a leg of a pedestrian;
Fig. 4 is a diagram for explaining a function of a bumper structure of the present invention in a normal state;
Fig. 5 is a diagram for explaining a function of a bumper structure of the present invention after contacting an object;
Fig. 6 is a table for showing numerical values as a result of a crush test;
Fig. 7 is a graph for showing a bending angleθof a knee when a ratio of crush strokes is 1.5 or more;
Fig. 8 is a graph for showing a bending angleθof a knee when a ratio of crush strokes is less than 1.5;
Fig. 9 is a diagram for showing a bumper structure as another embodiment of the present invention;
Fig. 10 is an exploded perspective view of a conventional bumper structure for a vehicle;
Fig. 11 is a diagram for explaining a function of a bumper structure for a vehicle; and
Fig. 12 is a diagram for explaining a function of a bumper structure for a vehicle.

### DETAILED DESCRIPTION OF THE INVENTION

Other features of this invention will be clearly understood from the following description of exemplary embodiments, which are given for illustration of the present invention and are not intended to be limiting thereof.

An arrow F in the figures denotes a front direction with respect to a vehicle.

Fig, 1 is an exploded perspective view of a bumper B at the left end thereof. The bumper B is composed of bumper upper parts 10 and bumper lower parts 20 provided below the bumper upper parts 10. The bumper upper parts 10 include an upper bumper beam 11, and an upper shock absorber 12. The bumper lower parts 20 include a lower bumper beam 21 and a lower shock absorber 22. An easily deformable bumper face 13 made of a soft resin or the like covers the upper shock absorber 12 and the lower shock absorber 22.

The upper bumper beam 11 has a rectangular hollow cross section and extends in a widthwise direction of a vehicle body over substantially all of the entire width. Bumper beam stays 14 are provided on a rear face 11a of the upper bumper beam 11 in the vicinity of both ends thereof. The bumper beam stays 14 protrude from the rear face 11a in a backward direction. Rear ends 14a of the bumper beam stays 14 are fixed to front faces 16a of side beams 16 by way of radiator panels 15 as a front part of the vehicle body. The shock absorber 12 is made of an elastic member such as an expanded resin and a rubber material, and is interposed between the bumper face 13 and the upper bumper beam 11 over the entire length of the bumper face 13 and the bumper beams 11 and 21.

The lower bumper beam 21 has a rectangular hollow cross section which is smaller than the cross sectional area of the upper bumper beam 11. The structure of the lower bumper beam 21 is the same as that of the upper bumper beam 11. The lower bumper beam 21 has a role as a reinforcing member by being located below the upper bumper beam 11 to be in parallel therewith, having a predetermined distance therebetween and extending over the approximately full length of the vehicle body. Then, the lower bumper beam 21 is fixed to the bumper beam stays 14 and the upper bumper beam 11 via stays 17. The lower shock absorber 22 is made of an elastic material such as an expanded resin or a rubber, similar to the upper shock absorber 12. The lower shock absorber 22 is interposed between the bumper face 13 and the lower bumper beam 21, extending over approximately the full length of the lower bumper beam 21. It is so designed that the lower shock absorber 22 has a smaller thickness in a vertical direction in comparison to that of the upper shock absorber 12.

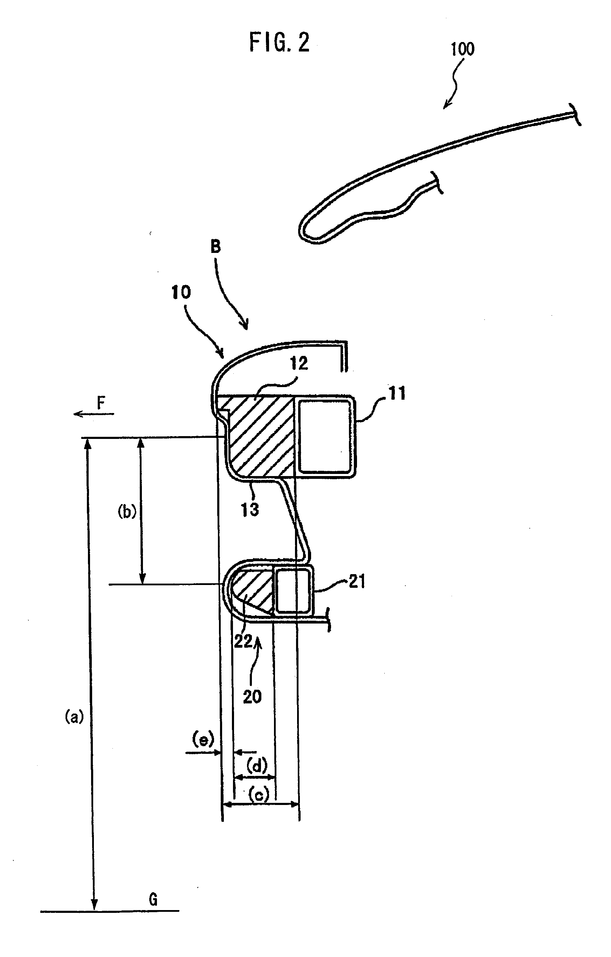

Fig. 2 is a diagram for explaining an installation of a bumper B to a vehicle body 100 by using a vertical cross sectional view. Fig. 2 also shows a relative arrangement of the members of the bumper B. Namely, a bumper upper part 10 is arranged to have a center position, with respect to the height, of the upper shock absorber 12 at a height (a) of about 455 mm from a ground surface. A bumper lower part 20 is arranged to have a center position, with respect to a height, of the lower shock absorber 22 below the upper shock absorber 12 at a distance (b) of about 200 mm ±40 mm from the center position of the upper shock absorber 12.

The upper shock absorber 12 is designed to have a thickness (c) in the lengthwise direction of the vehicle body 100 of about 90 mm. On the other hand, the lower shock absorber 22 is designed to have a thickness (d) in the lengthwise direction of the vehicle body 100 to be about one half of the thickness (c), i.e., about 45 mm. Moreover, a front end of the upper shock absorbers 12 is positioned forward with respect to that of the lower shock absorber 22 at a distance (e) therebetween of about 15 mm.

The bumper B with the above mentioned structure is designed to have the bumper upper part 10 to be more deeply crushed in a backward direction by an identical impact load applied from the front direction of the vehicle body 100 than the bumper lower part 20. More specifically, the upper shock absorber 22 is designed to have a larger crush stroke than the lower shock absorber 12 when an identical impact load is applied to the members 22 and 12. The difference of the crush strokes between the upper shock absorber 22 and the lower shock absorber 12 is determined to be within an appropriate range.

The ratio of the crush strokes is appropriately selected by preparing the upper and lower shock absorbers 12 and 22 from different elastic materials, one or more kinds of expanded resins of which the expansion ratio per unit volume is different, or rubber materials with a different rigidity from one another.

It is preferable that the upper shock absorber 12 and the lower shock absorber 22 are prepared so as to have a ratio of crush strokes of (1.5 to 2) and 1, respectively. The ratio of the crush strokes can be controlled by preparing the upper and the lower shock absorbers 12 and 22 from polypropylene expanded materials with different expansion ratios. The expansion ratios of the upper shock absorber 12 can be determined to be 1.5 to 3 times that of the lower shock absorber 22 for controlling the ratio of the crush strokes.

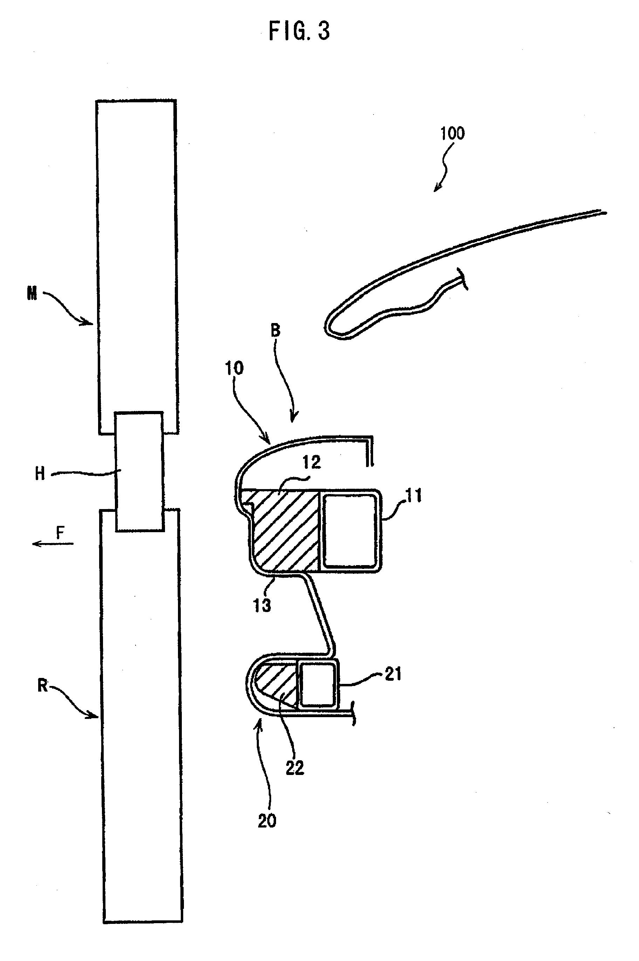

Referring to Figs. 3 to 5, the functions and effects of the bumper B with the above structure, when the bumper B contacts a pedestrian, will be explained. Members, which are not directly used in the explanation, are omitted in these figures.

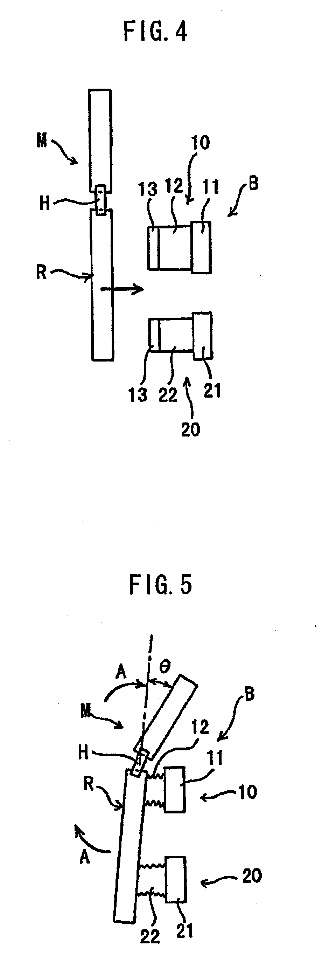

Fig. 3 is a diagram for explaining a function of the bumper B and a positional relationship between the bumper B and the leg R. Figs. 4 and 5 are diagrams for explaining functional states of the bumper B before and after contacting a pedestrian, respectively.

When a vehicle moving at a low speed accidentally contacts a pedestrian M, the bumper upper part 10 will contact the pedestrian near a knee H, and simultaneously the bumper lower part 20 will contact a lower leg part below the knee. As mentioned previously, the lower shock absorber 22 is prepared so as to have a smaller crush stroke than the upper shock absorber 12. In this embodiment, it is assumed that the pedestrian M is crossing a road where the vehicle runs. Hence it is generally considered that the vehicle will contact the pedestrian M laterally.

In the above condition, the bumper lower part 20 pushes the lower part of a leg R of a pedestrian M and applies a force in an upward direction, while the bumper upper part 10 contacts the pedestrian M approximately at the knee H to move the upper part of the leg in a more backward direction in comparison to the lower leg part. Accordingly, a rotational force in a direction of an arrow A is applied to the leg R. Thus, an impact load to be applied to the knee H and hence the damage to be applied to the knee H is decreased.

In addition, the crush stroke of the upper shock absorber 12 in the lengthwise direction of the vehicle body 100 is controlled to be about 1.5 to about 2 times that of the lower shock absorbers 22 when load is applied from the front of the vehicle. Therefore, a bending angle θ formed by a leg part below a knee H and another leg part above the knee H (hereinafter, referred to as a bending angle θ of a knee H) can be 15 ° or less when the impact load is applied to the lateral side of the leg R. The value as the bending angle θ of a knee H is a value set by law, that is, a regulation for protecting pedestrians for decreasing injury on a knee joint when a vehicle contacts the pedestrian. According to the installation within the legal value, an injury on a knee H is eliminated to a maximum extent, and the knee can be appropriately protected.

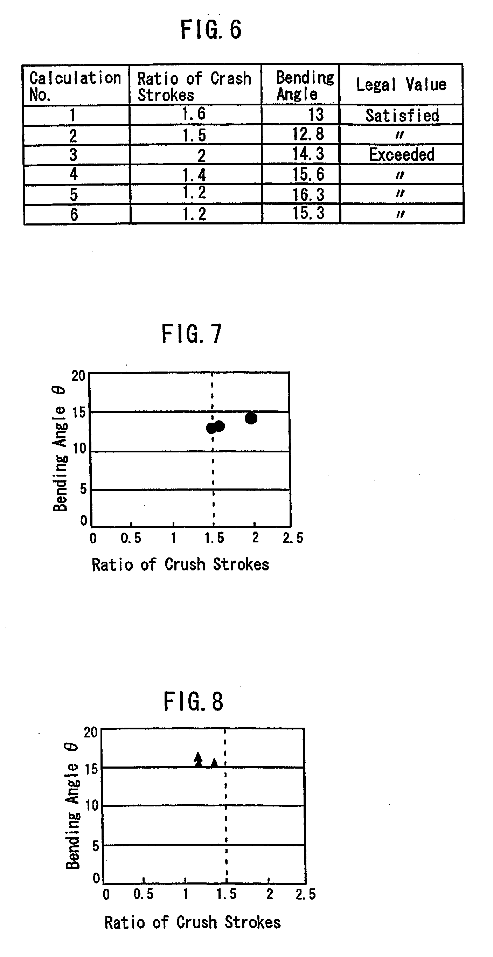

Fig. 6 is a table containing test results, Fig. 7 is a graph for showing bending angles θ of a knee H when the ratio of crush strokes is in the range of 1.5 to 2, and Fig. 8 is a graph for bending angles of a knee H when the ratio of crush strokes less than 1.5.

As can be seen from Figs. 6 and 7, the bending angles θ of a knee H are less than 15 ° when the ratio of crush strokes of the upper shock absorber 12 to the lower shock absorber 22 is a value in the range of 1.5 to 2. This satisfies the legally determined value. This is because the ratio of crush strokes of the upper and lower shock absorbers 12 and 22 is controlled to have a predetermined value. Then, the behavior of a leg part below a knee H, when the bumper contacts the leg, is appropriately controlled, and the leg is appropriately inclined in a backward direction. Accordingly, the bending angle θ of the knee H can be made small within a predetermined range. Consequently, damage to the knee can be decreased.

On the contrary, when the ratio of crush strokes of the upper shock absorber 12 to the lower shock absorber 22 is less than 1.5 as shown in Figs. 6 and 8, the bending angles θ of a knee H are over 15 ° exceeding the legally determined value. This is because the crush strokes of the upper and lower shock absorbers 12 and 22 are almost equal to each other. Namely, when the bumper contacts a leg of a pedestrian, the inclination of a leg part below a knee H is small. As a result, the bending angles θ of the knee H are increased.

As explained above, it is preferable that the ratio of the crush strokes of the upper and lower shock absorbers 12 and 22 is in the range of 1.5 to 2. However, any ratio of crush strokes is applicable, as long as a leg part below the knee can be appropriately controlled so as to be inclined in a backward direction and a bending angleθof a knee can be decreased.

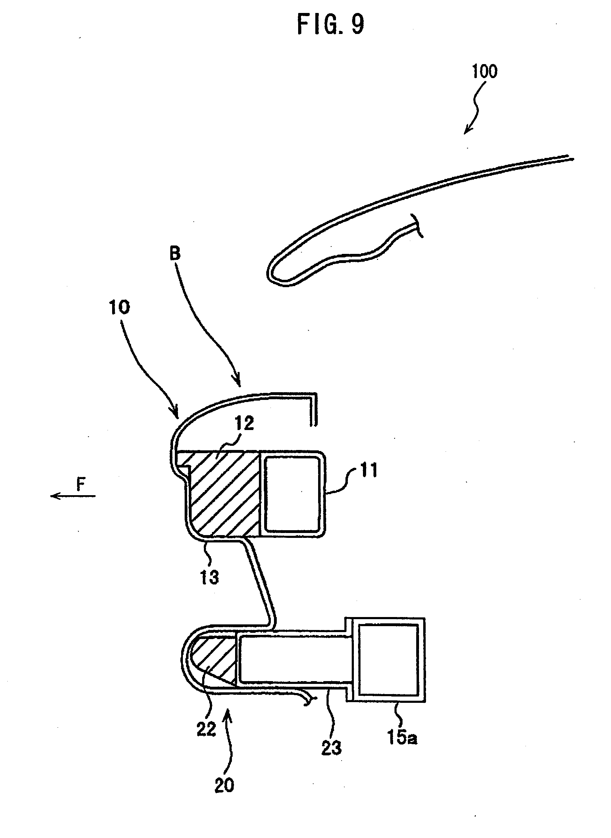

Furthermore, other bumper structures can be used as long as the ratio of the crush strokes can be maintained for providing the functions and the effects of the invention. For instance, a bumper structure of the present invention may be as shown in Fig. 9 wherein a lower shock absorber 22 is fixed to a lower part 15a of a radiator panel via a bracket 23 extending approximately over all the width of the vehicle body 100.

In the above description, embodiments are shown where the bumper structure is used for a front bumper. However, it is also possible to use the bumper structure for a rear bumper.

As is explained above, a bumper structure according to the present invention includes an upper shock absorber as a bumper upper part and a lower shock absorber as a bumper lower part so as to achieve a larger crush stroke of the upper shock absorber than that of the lower shock absorber when receiving an identical impact load. Therefore, when a vehicle moving at a low speed contacts a pedestrian, the bumper upper part and the bumper lower part respectively contact a leg part near a knee and a lower leg part below the knee, the bumper lower part pushes the lower part of the leg forward and applies a force in an upward direction to the leg. Simultaneously, the bumper upper part shifts the part around the knee backwardly in comparison to the lower leg part. Accordingly, the legs are caused to rotate, so that the impact load applied to the knee is decreased. Further, the upper and the lower shock absorbers are prepared to have a predetermined ratio of crush strokes therebetween when receiving an identical impact load. Therefore, the bending angle of the knee can be in a predetermined range when a vehicle contacts the pedestrian. Thus, it is possible to appropriately protect a pedestrian by certainly minimizing damage on the knee.

Other structures and functions that may be disclosed in Japanese Patent Application 2002-216882, filed on July 25, 2002 are hereby incorporated by reference into this application.

The present invention being thus described, it will be clearly understood that the same may be varied in many ways. Such variations are not to be regarded as a departure from the spirit and scope of the present invention, and all such modification as would be easily understood to one skilled in the art are intended to be included within the scope of the appended claims.

## Claims

1. A bumper structure to be provided on a front part of a vehicle body, comprising:
a bumper face provided on said front part of said vehicle body and extending in a widthwise direction of said vehicle body;
an upper shock absorber extending in a widthwise direction of said vehicle body interposed between said front part of said vehicle body and said bumper face; and
a lower shock absorber provided below said upper shock absorber and interposed between said front part of said vehicle body and said bumper face, a first crush stroke of said upper shock absorber being larger than a second crush stroke of said lower shock absorber when an identical load is applied from the front to each of said upper shock absorber and said lower shock absorber, and a crushing ratio of said first crush stroke to said second crush stroke being determined as a predetermined value.

2. The bumper structure as claimed in claim 1, wherein said crushing ratio is determined so that said first crush stroke is about 1.5 to about 2 times said second crush stroke.

3. The bumper structure as claimed in claim 1 or 2, wherein said upper shock absorber and said lower shock absorber are made of different elastic materials.

4. The bumper structure as claimed in any of claims 1 to 3, wherein said upper shock absorber and said lower shock absorber are respectively made of at least one expanded resin with different expansion ratios.

5. The bumper structure as claimed in any of claims 1 to 4, wherein a front end of said upper shock absorber is located more forward with respect to a lengthwise direction of said vehicle body than a front end of said lower shock absorber.

6. The bumper structure as claimed in any of claims 1 to 5, wherein said upper shock absorber is spaced apart from said lower shock absorber at a distance in the range of about 160 mm to 240 mm.

7. The bumper structure as claimed in any of claims 1 to 6, wherein said upper shock absorber is provided at a height of about 455 mm from a ground surface.

8. The bumper structure as claimed in any of claims 1 to 7, wherein said upper shock absorber has a thickness in a lengthwise direction of said vehicle body of about 90 mm and said lower shock absorber has a thickness in a lengthwise direction of said vehicle body of about 45 mm.

9. A vehicle comprising the bumper structure as claimed in any of claims 1 to 8.
